# EUROPÄISCHE PATENTANMELDUNG

(11) **EP 2 033 700 A1**
(43) Veröffentlichungstag der Anmeldung: **11.03.2009**
(21) Anmeldenummer: 08019344.4
(22) Anmeldetag: 09.07.2004
(51) Int. Cl.: B01D 24/16, A47J 31/60, C02F 1/00

(54) **Filterpatrone**

(30) Priorität: 10.07.2003 DE 10331402; 17.12.2003 DE 10359443
(62) Teilanmeldung aus: 04763152.8
(71) Anmelder: Aquis Wasser-luft-systeme GmbH Lindau, Zweigniederlassung Rebstein, 9445 Rebstein (CH)
(72) Erfinder: Zucholl, Klaus, Dr., 68199 Mannheim (DE); Wawria, Andreas, 9443 Widnau (CH)
(74) Vertreter: Roth, Klaus

(57) **Zusammenfassung**

Es wird eine umweltfreundliche Wasserfilterpatrone zum Einsetzen in den Wassertank einer Haushaltsmaschine wie ein Getränkeautomat oder dergleichen vorgeschlagen, die nach Gebrauch einfach zu entsorgen ist. Dies wird erfindungsgemäß dadurch erreicht, dass eine außerhalb des Filtergehäuses verlaufende Abflussleitung mit Verbindungselementen zur Verbindung an eine Saugleitung der Haushaltsmaschine vorgesehen ist.

## Beschreibung

Die Erfindung betrifft eine Filterpatrone nach dem Oberbegriff des Anspruchs 1 sowie einen Wassertank für eine Haushaltsmaschine mit einer solchen Filterpatrone sowie eine entsprechende Haushaltsmaschine.

Zum Einsatz in Getränkeautomaten sind Filterpatronen bekannt geworden, die unmittelbar in den Wassertank der Getränkemaschine eingesetzt werden. Diese Filterpatronen sind mit bodenseitigen Wassereintrittsöffnungen versehen, durch die das Wasser eintritt und anschließend das Filtermaterial im Aufstrom passiert. Anschließend wird das gefilterte Wasser in einer zentralen Fallleitung im Innern der Filterpatrone nach unten geführt, wo die Filterpatrone bzw. die Fallleitung mit einem Sauganschluss der Maschine verbunden ist.

Die Erfindung hat die Aufgabe, eine umweltfreundliche Filterpatrone vorzuschlagen, die möglichst einfach zu entsorgen ist.

Diese Aufgabe wird ausgehend von einer Wasserfilterpatrone der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Wasserfilterpatrone dadurch aus, dass eine außerhalb des Filtergehäuses verlaufende Abflussleitung mit einer Verbindung an eine Saugleitung der Haushaltsmaschine vorgesehen ist.

Durch diese Maßnahme entfällt eine zentrale Fallleitung. Das Filtergehäuse kann einfacher ausgebildet werden, so dass eine leichtere Be- und Entfüllung möglich wird. Durch den einfacheren Filteraufbau wird insgesamt weniger Material verbaut, was die spätere Entsorgung der verbrauchten Filterpatronen erleichtert. Auch die Möglichkeit einer leichteren Materialtrennung vereinfacht die Entsorgung durch sortenreinen Abfall.

Sofern ein schüttfähiges Filtermaterial vorgesehen wird, ist auf beiden Seiten des Filtermaterials eine wasserdurchlässige Trennwand z.B. in Form eines Siebes erforderlich. Eine solche Trennwand ist ohne zentrale Fallleitung ebenfalls erheblich einfacher zu gestalten.

Vorteilhafterweise wird zudem eine Kupplung zwischen Abflussleitung und dem Filtergehäuse vorgesehen. Die außerhalb des Filtergehäuses verlaufende Abflussleitung kann so bei einem Wechsel der Filterpatrone beibehalten werden, so dass der Materialaufwand für den zu wechselnden Einsatz weiter reduziert wird. Durch die nochmalige Reduzierung der Menge des zu wechselnden Materials wird wiederum die Entsorgung erleichtert.

Darüber hinaus wird dadurch auch die Filtermontage vereinfacht, da die Anschlussverbindung zur an der Haushaltsmaschine verbleibenden Abflussleitung für den Bediener zumindest sichtbar, je nach Ausführung auch unmittelbar zugänglich angeordnet werden kann.

In einer besonderen Ausführungsform der Erfindung wird die Abflussleitung als Fallleitung im Wassertank ausgebildet. Dies bietet zum einen den Vorteil, dass die erfindungsgemäße Filterpatrone in herkömmlichen Getränkeautomaten einsetzbar ist, bei denen ein Wasserabzug im Bodenbereich des Wassertanks vorgesehen ist. Die Fallleitung wird hierbei bevorzugt, wie oben angeführt, als von der Filterpatrone separates Teil gefertigt, das in den Wassertank eingesetzt wird und dort auch beim Filterwechsel verbleibt. Die Filterpatrone wird mit der stationär vorgesehenen Fallleitung lösbar verbunden, wobei die Verbindung oberhalb oder unterhalb des Wasserpegels liegen kann. Da diese Kupplungsstelle zwischen Fallleitung und Filtergehäuse ebenso wie die Kupplungsstelle zwischen Fallleitung und Sauganschluss im Innern des Wassertanks angeordnet ist, sind keine größeren Dichtmaßnahmen erforderlich. Die Filterpatrone selbst kann wie o.a. als einfaches leicht mit Filtermaterial zu füllendes und wieder entleerbares und somit sortenrein entsorgbares Gehäuse hergestellt werden.

Ein solches Gehäuse kann darüber hinaus gereinigt und wiederbefüllt werden, so dass nur noch das Filtermaterial selbst als Abfall anfällt.

In einer anderen Ausführungsform, der Erfindung wird die Abflussleitung außerhalb des Wasservorratsbehälters ausgebildet. Dies bietet den Vorteil, dass ein Wassertank verwendet werden kann, der bodenseitig keine Öffnung mehr aufweisen muss. Darüber hinaus könnte eine solche Abflussleitung fest mit der entsprechenden Saugleitung der Haushaltsmaschine, insbesondere eines Kaffeeautomaten, verbunden werden. Diese Abflussleitung kann dabei außerhalb des Wassertanks als Fallleitung ausgebildet oder direkt ohne Fallstrecke in die Saugleitung der Maschine, z.B. eines Kaffeeautomaten übergehen.

In diesem Fall könnte der Durchlass für die Abflussleitung oberhalb des Wasserpegels liegen, so dass Dichtmaßnahmen an dieser Stelle zwar für den luftdichten Abschluss der Saugleitung nach wie vor erforderlich sind, im Falle eines an sich unerwünschten Wasseraustritts das Wasser jedoch im Wassertank aufgefangen wird. Günstig wäre in diesem Fall ein entsprechender Durchtritt im oberen Bereich des Wassertanks, so dass das Herausnehmen des Wassertanks mit oder ohne Filterpatrone bei angehobenem Deckel ohne Beeinträchtigung durch die Abflussleitung möglich ist.

Im Falle eines Anschlusses außerhalb des Wassertanks müsste die Abflussleitung darüber hinaus nicht zwangsweise als Fallleitung ausgebildet werden, sie könnte vielmehr unmittelbar in geeigneter Höhe entsprechenden Maschinenkomponenten zugeführt werden.

In einer weiteren besonderen Ausführungsform der Erfindung wird eine Fallleitung durch eine Trennwand im Wassertank gebildet. Eine solche Trennwand ist bei der Fertigung des Wassertanks, der insbesondere bei Getränkeautomaten aus verschiedenen Gründen häufig eine flache Form aufweist, leicht anzubringen. In diesem Fall ist die Ausbildung der Abflussleitung mit sehr geringem Aufwand möglich. Die durch eine Trennwand vom restlichen Wassertank abgetrennte Fallleitung ist an der Oberseite anschließend mit entsprechenden Kupplungselementen zum Anschluss der Filterpatrone zu versehen.

Vorzugsweise wird eine fest in den Wassertank integrierte, z.B. durch eine solche Trennwand gebildete Fallleitung oder eine im Innern des Wassertanks separat angebrachte Fallleitung der Filterpatrone mit einer verschließbaren Öffnung im Bodenbereich des Wassertanks versehen. Dies ermöglicht den Betrieb der entsprechenden Maschine ohne eingesetzte Filterpatrone, indem diese Verbindungsöffnung geöffnet wird. Durch die bodennahe Anordnung dieser Verbindungsöffnung kann der Wassertank zumindest bis auf Höhe dieser Öffnung auch ohne Filterpatrone entleert werden. Die Verschlussbetätigung kann dabei mit dem Filtereinsatz gekoppelt werden oder separat manuell oder automatisch durch die Haushaltsmaschine stattfinden.

In einer vorteilhaften Weiterbildung dieser Ausführungsform wird der Verschluss bzw. das Öffnen dieser Verbindungsöffnung mit dem Einsatz bzw. der Entfernung einer Wasserfilterpatrone verbunden. Dies kann beispielsweise durch einen entsprechenden ggf. mit Dichtelementen versehenen Schiebermechanismus bewirkt werden, der durch Schließen der Kupplung zwischen Fallleitung und Filterpatrone betätigt wird.

Auch ein Verdrehen der Fallleitung zur Herstellung der Kupplung mit der Filterpatrone wäre denkbar, um zugleich eine Verbindungsöffnung im bodennahen Bereich zu verschließen. Darüber hinaus wäre eine besondere Weiterbildung der Erfindung denkbar, in der die Filterpatrone unter Formschluss an die separate Fallleitung angefügt wird und dabei über die Außenwand des Filtergehäuses eine entsprechende Öffnung verschließt.

Im Falle einer Trennwand im Wassertank zur Herstellung einer Fallleitung könnte beispielsweise eine Filterpatrone in einer entsprechenden Führung der Trennwand geführt und bis zur Verbindungsöffnung eingesteckt werden.

Wie bereits oben erwähnt, wird in einer besonderen Ausführungsform der Erfindung eine Kupplung zwischen Abflussleitung und Saugleitung vorgesehen. Dies hat zum einen den Vorteil, dass eine erfindungsgemäße Filterpätrone auch in bestehende Haushaltsmaschinen, insbesondere Kaffeeautomaten, eingesetzt werden kann, indem die Abflussleitung in den Wassertank eingesetzt und mit dem bodenseitigen Anschluss für die Saugleitung verbunden wird. Darüber hinaus kann eine solche Abflussleitung im Falle eines Defekts leicht ausgetauscht werden.

Weiterhin wird in einer vorteilhaften Weiterbildung dieser Ausführungsform die Abflussleitung zugleich als Adapterstück zur Anpassung einer Filterpatrone an den jeweiligen Maschinentyp ausgebildet. Somit kann ein und dieselbe Filterpatrone bei unterschiedlichen Maschinentypen oder umgekehrt können verschiedene Filterpatronen bei ein und derselben Maschine verwendet werden, wobei lediglich das entsprechende Adapterstück einzusetzen ist, das in diesem Fall zugleich die Abflussleitung der Filterpatrone beinhaltet.

Eine erfindungsgemäße Filterpatrone kann vorteilhafterweise auch mit einer Anzeige für den Zeitpunkt des erforderlichen Filterwechsel versehen werden. Eine solche Anzeige kann beispielsweise mit einem Sättigungssensor ausgestattet sein, der die Erschöpfung der Filterkapazität angibt. Auch eine Durchflussmessung oder Zeiteinstellung kann zur Bestimmung dieses Zeitpunktes herangezogen werden.

Ein Ausführungsbeispiel der Erfindung ist in der Zeichnung dargestellt und wird anhand der Figuren nachfolgend näher erläutert.

Im Einzelnen zeigen
- Fig. 1: eine schematische Schnittdarstellung eines Wassertanks mit erfindungsgemäßer Filterpatrone,
- Fig. 2: eine schematische Darstellung einer weiteren Ausführungsform,
- Fig. 3: eine Darstellung gemäß Fig. 2 einer dritten Ausführungsform der Erfindung,
- Fig. 4: eine Darstellung gemäß den Fig. 2 und 3 einer vierten Ausführungsform der Erfindung,
- Fig. 5: eine Darstellung gemäß den Fig. 2 bis 4 einer fünften Ausführungsform der Erfindung,
- Fig. 6: eine schematische Darstellung einer sechsten Ausführungsform und
- Fig. 7: eine schematische Darstellung einer weiter modifizierten Ausführungsform.

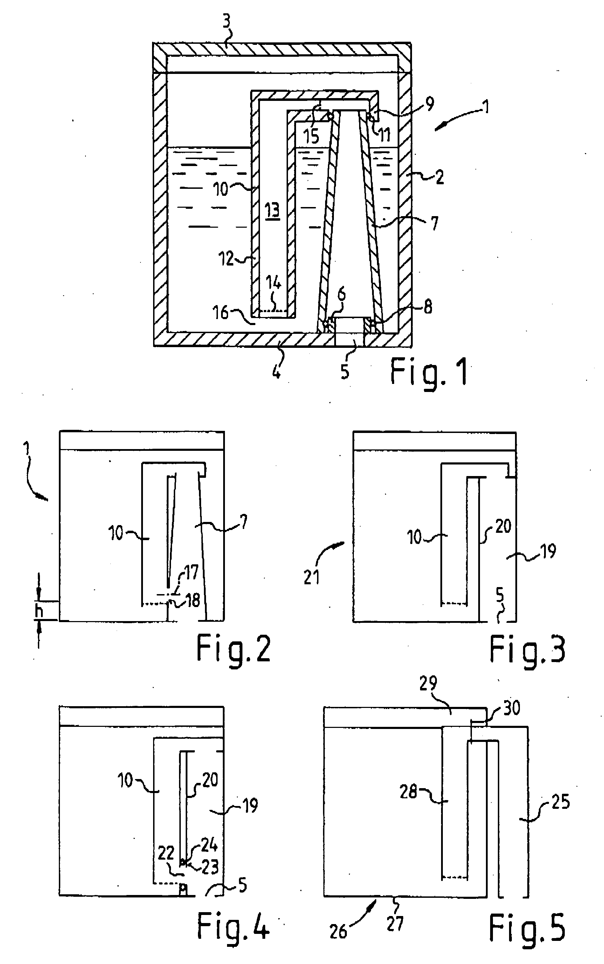

In Fig. 1 ist der Wassertank 1 einer Haushaltsmaschine, z.B. eines Getränke- bzw. Kaffeeautomaten dargestellt. Der Wassertank 1 umfasst einen Behälter 2, der über einen Deckel 3 verschließbar ist. Im Boden 4 des Wassertanks 1 bzw. Behälters 2 ist eine Saugöffnung 5 für einen nicht näher dargestellten Anschluss an die entsprechende Haushaltsmaschine, z.B. einen Getränkeautomaten, wie ein Kaffeeautomat oder dergleichen vorhanden.

Auf der Innenseite der Saugöffnung 5 ist ein Ringbund 6 vorgesehen, auf den eine Fallleitung 7 aufgesteckt ist. In der dargestellten Ausführungsform ist ein Dichtring 8 zum dichten Anschluss der Fallleitung 7 vorgesehen.

Auf der Oberseite der Fallleitung 7 ist ein Steckelement 9 einer Filterpatrone 10 aufgesteckt und wiederum durch einen Dichtring 11 abgedichtet. Die Filterpatrone 10 umfasst ein rohrförmiges Filtergehäuse 12, das eine Filterkammer 13 aufweist, die durch zwei Siebe 14, 15 abgeschlossen ist. In der Filterkammer 13 ist das benötigte Filtermaterial untergebracht. In Fig. 1 ist erkennbar, dass das Filtergehäuse 12 demnach unten offen ist, so dass der Spalt 16 zwischen Filtergehäuse 12 und Behälterboden 4 die Eintrittsöffnung in die Filterkammer 13 bildet.

Sobald an der Saugöffnung 5 Wasser angesaugt wird, findet eine aufwärts gerichtete Wasserströmung durch die Filterkammer 13 zum oberen Bereich der Fallleitung 7 statt.

Bei Erschöpfung der Filterpatrone 10 wird diese mitsamt dem Steckelement 9 von der Fallleitung 7 abgenommen und ausgetauscht. Die Fallleitung 7 kann hierbei im Wassertank 1 verbleiben.

In der dargestellten Ausführungsform ist die Fallleitung 7 ohne weiteres als Adapterstück auszubilden, die zwischen verschiedenartigen Anschlusselementen einsetzbar ist.

Fig. 2 zeigt eine weitere Ausführungsvariante, die im Wesentlichen der in Fig. 1 dargestellten Ausführung entspricht. Abweichend hiervon ist die Filterpatrone 10 formschlüssig im unteren Bereich an die Fallleitung 7 angepasst. Somit ist es möglich, eine mittels eines Striches dargestellte Durchgangsöffnung 17 zwischen dem Inneren des Behälters 2 und dem Inneren der Fallleitung 7 herzustellen, die mittels des Wandbereiches 18 der Filterpatrone 10 bei eingesetzter Filterpatrone abgedichtet wird. Auf diese Weise kann auch bei entfernter Filterpatrone 10 der Wassertank 1 bis auf eine Höhe h, in der die Öffnung 17 liegt, entleert werden und somit ist die entsprechende Haushaltsmaschine auch ohne Filterpatrone zu betreiben.

Die Ausführung gemäß Fig. 3 entspricht wiederum im Wesentlichen den vorgenannten Ausführungsbeispielen, wobei nunmehr die Fallleitung 19 durch eine Trennwand 20 im Randbereich des Wassertanks 21 ausgebildet ist. In dieser Ausführungsform ist kein der Fallleitung 7 entsprechendes Zwischenstück zwischen Filterpatrone 10 und Fallleitung 19 erforderlich.

Fig. 4 zeigt eine Ausführung entsprechend Fig. 3, wobei nunmehr die Filterpatrone 10 dicht an der Trennwand 20 entlang geführt ist, so dass in der Trennwand 20 eine bodennahe Öffnung 22 durch den entsprechenden Wandbereich 23 der Filterpatrone 10 verschließbar ist. Vorliegend wurde ein Dichtelement 24 eingezeichnet, um die Möglichkeit zusätzlicher Abdichtmaßnahmen anzudeuten.

Auch diese Ausführungsform ermöglicht den Betrieb der entsprechenden Haushaltsmaschine ohne Filterpatrone 10, wobei wiederum der Wasserfluss bei entfernter Filterpatrone durch die Öffnung 22 stattfinden kann.

Fig. 5 hingegen zeigt eine anderweitig geartete Ausführungsform der Erfindung. Hier befindet sich die Fallleitung 25 außerhalb des Wassertanks 26, der somit keine Öffnung im Behälterboden 27 aufweist.

Die Verbindung der Filterpatrone 28 findet im oberen Bereich des Wassertanks 26 statt. Entsprechende Kupplungselemente 30 sind in Fig. 5 lediglich angedeutet. Hier kann an dieser Stelle beispielsweise eine Steckkupplung vorgesehen werden.

Durch die Anordnung der Kupplungselemente 30 im oberen Bereich des Wassertanks 26 ist es möglich, die Filterpatrone von der Fallleitung 25 abzunehmen und anschließend den Wassertank 26 zu entnehmen. Bei entsprechender Ausgestaltung der Halterung des Wassertanks 26 ist eine Entnahme des Wassertanks 26 bei geöffnetem Deckel 29 auch nach unten hin denkbar, ohne die Filterpatrone 28 von der Fallleitung 25 zu entfernen.

Die Fallleitung 25 kann dabei als fester Bestandteil der entsprechenden Maschine z.B. eines Getränkeautomaten verbunden oder wiederum als separates Teil vorgesehen werden. Im Falle einer separaten Ausbildung kann die Fallleitung 25 als Adapterstück zur Anpassung einer bestimmten Filterpatrone 28 an eine Vielfalt von Haushaltsmaschinen bzw. zum Anschluss unterschiedlicher Filterpatronen 28 an eine bestimmte Haushaltsmaschine verwendet werden.

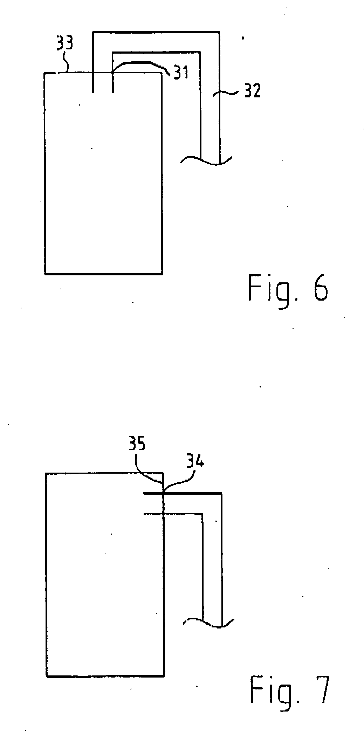

Die Figur 6 und 7 zeigen schematisch zwei weitere Ausführungsformen der Erfindung. Figur 6 veranschaulicht eine Ausführungsform, bei der die Kupplung 31 zwischen der Fallleitung 32 und dem Filtergehäuse im Deckel 33 angeordnet ist. In der Ausführung gemäß Figur 7 hingegen ist die Kupplung 34 im Bereich der Seitenwand 35 angebracht.

Bezugszeichenliste:
- 1: Wassertank
- 2: Behälter
- 3: Deckel
- 4: Boden
- 5: Saugöffnung
- 6: Ringbund
- 7: Fallleitung
- 8: Dichtring
- 9: Steckelement
- 10: Filterpatrone
- 11: Dichtring
- 12: Filtergehäuse
- 13: Filterkammer
- 14: Sieb
- 15: Sieb
- 16: Spalt
- 17: Öffnung
- 18: Wandbereich
- 19: Fallleitung
- 20: Trennwand
- 21: Wassertank
- 22: Öffnung
- 23: Wandbereich
- 24: Dichtelement
- 25: Fallleitung
- 26: Wassertank
- 27: Boden
- 28: Filterpatrone
- 29: Deckel
- 30: Kupplungselement
- 31: Kupplung
- 32: Fallleitung
- 33: Deckel
- 34: Kupplung
- 35: Seitenwand

## Patentansprüche

1. Wasserfilterpatrone zum Einsetzen in den Wassertank einer Haushaltsmaschine, wie einen Getränkeautomaten, insbesondere einen Kaffeeautomaten, einen Dampfreiniger oder dergleichen, mit einem Filtergehäuse, in dem ein Filtermaterial zwischen einem unteren Zulauf und einem oberen Ablauf angeordnet ist, wobei das Gehäuse im Bodenbereich eine oder mehrere Wassereintrittsöffnungen aufweist, wobei eine Abflussleitung (7) als separat ausgebildeter Adapter mit Verbindungselementen zur Verbindung an eine Saugleitung (5) der Haushaltsmaschine vorgesehen ist, **dadurch gekennzeichnet, dass** die Wasserzufuhr in das Filtergehäuse (12) durch eine vom Adapter getrennt ausgebildete Eintrittsöffnung vorgesehen ist.

2. Wasserfilterpatrone nach Anspruch 1 **dadurch gekennzeichnet, dass** der Adapter der Wasserfilterpatrone zugeordnet ist und mit der Saugleitung der Haushaltsmaschine verbindbar ausgebildet ist.

3. Wasserfilterpatrone nach einem der vorgenannten Ansprüche , **dadurch gekennzeichnet, dass** der Adapter bei Austausch der Wasserfilterpatrone an der Saugleitung der Haushaltsmaschine verbleibt.

4. Wasserfilter nach einem der vorgenannten Ansprüche **dadurch gekennzeichnet, dass** der Adapter zur Anpassung einer Wasserfilterpatrone an unterschiedliche Anschlüsse der Saugleitungen von Haushaltsmaschinen ausgebildet ist.

5. Wasserfilterpatrone nach einem der vorgenannten Ansprüche **dadurch gekennzeichnet, dass** der Adapter zur Anpassung unterschiedlicher Wasserfilterpatronen an einen Anschluss der Saugleitung der Haushaltsmaschinen ausgebildet ist.
